# EUROPÄISCHE PATENTSCHRIFT

(11) **EP 0 480 552 B1**
(45) Veröffentlichungstag und Bekanntmachung des Hinweises auf die Patenterteilung: **25.01.1995**
(21) Anmeldenummer: 91250275.4
(22) Anmeldetag: 08.10.1991
(51) Int. Cl.: B29C 73/00

(54) **Verfahren zur Behandlung von Faserverbundwerkstoffen**
Method for handling fibrous composite
Procédé pour traiter des matières compound fibreuses

(30) Priorität: 12.10.1990 DE 4032861
(43) Veröffentlichungstag der Anmeldung: 15.04.1992
(73) Patentinhaber: HMS ANTRIEBSSYSTEME GMBH, D-10785 Berlin (DE)
(72) Erfinder: Holstein, Wolfgang, Dr.-Ing., W-1000 Berlin 30 (DE)
(74) Vertreter: Christiansen, Henning, Dipl.-Ing.

(56) Entgegenhaltungen:
- EP-A- 0 250 779
- DE-A- 4 018 135
- GB-A- 1 295 074

## Beschreibung

Die Erfindung betrifft ein Verfahren der im Oberbegriff des Anspruchs 1 angegebenen Art.

Die Verwendung von Faserverbundwerkstoffen findet ständig wachsende Verbreitung vor allem in der Luft- und Raumfahrttechnik sowie zunehmend auch in allen anderen Bereichen des Maschinenbaus. Waren die Einsatzgebiete früher noch beschränkt auf gring belastete Formteile zur Ummantelung und Verkleidung belasteter Bauteile bzw. Werkstücke, so kommen heute immer mehr selbst hochbelastete, aus Faserwerkstoffen bestehende Konstruktionselemente zur Anwendung. Hierbei werden sowohl sämtliche Varianten vorimprägnierter Prepregmaterialien, also in Kunstharz getränkte, folienartige Gewebe, als auch trockene, erst später mit Kunstharzen, wie Duro- oder Thermoplasten, zu versehene Fasermaterialien in Gewebe- oder Gelegeform lagenweise geschichtet. Die Ausnutzung der Werkstofforthotropie durch belastungsgerechte Ausrichtung der Verstärkungsfasern bringt Vorteile bezüglich der gewichtsspezifischen Betriebsfestig- und Steifigkeiten. Bedingt durch die polymeren Matrixwerkstoffe erweist sich zwar die chemische Resistenz, das Korosionsverhalten und die nahezu unbegrenzten Formgebungsmöglichkeiten als vorteilhaft, demgegenüber wirken sich aber die relativ hohen Faser- und Matrixmaterialkosten sowie die Kosten für die aufwendige Fertigung nachteilig aus. Die Benutzer der Bauteile sind daher bei möglichen Schadensfällen aus ökonomischen Gründen zur Durchführung von Reparaturen gezwungen, um ein vollständigen Ersatz des Bauteils so lang wie möglich hinauszuschieben.

Unter Betriebsbedingungen werden die aus Faserverbundwerkstoffen bestehenden Bauteile zum größten Teil nicht durch die Betriebslasten überbeansprucht und somit geschädigt, sondern vor allem durch schwer abschätzbare Schlag-, Überhitzungs- oder Schälbeanspruchungen. Deshalb überwiegen in bezug auf mögliche Faserbrüche solche Schadensfälle, bei denen Matrixzerstörungen und Delaminationen vorherrschend sind.

Zur Behebung dieser Schadensfälle sind entsprechende Reparaturtechniken aus dem Flugzeugbau bekannt. Diese basieren in der Regel auf Ausarbeiten des schadhaften Laminats, insbesondere durch Ausschleifen, sowie dem anschließenden Ersatz der entfernten Laminatlagen durch entsprechende Reparaturlaminatlagen. Dabei werden die Reparaturlaminatlagen durch Aushärten der Kunstharze in Kalt- oder Warmklebetechnik mit dem Ausgangsmaterial verbunden. Alternativ dazu werden aus verschiedenen Materialien bestehende Reparaturplatten durch Aufkleben bzw. Aufnieten oder Aufschrauben auf den möglichen Schadensbereich aufgebracht.

Als von Nachteil erweist sich bei den bekannten Reparaturverfahren, daß vor allem durch Aufnieten und Aufschrauben die Ursprungsgeometrie der Bauteile verändert und dadurch der Einsatzbereich der Bauteile eingeschränkt wird. Weiterhin führen die Reparaturverfahren alle zu einer unnötigen Vergrößerung des eigentlichen Schadensbereichs, da unbeschädigtes Material mitentfernt, Fasern zerschnitten werden und somit die Kontinuität des Kraftflusses unterbrochen wird. Die Folge sind große Reparaturbereiche selbst bei kleinen Schäden, erhöhter Materialeinsatz zur Erhaltung des Tragquerschnitts und hohe Reparaturkosten aufgrund der komplizierten Techniken.

Durch das Einkleben der Reparaturlaminatlagen wird die Tragfähigkeit des reparierten Bauteils, insbesondere aufgrund der mangelhaften Methoden zur Qualitätssicherung der Adhäsion, zusätzlich verschlechtert. Dies gilt im Besonderen, wenn gealterte, z.T. durch Wasser, Öl, Hydraulikflüssigkeiten oder andere chemische Substanzen kontaminierte Fasermaterialien geklebt werden müssen. Hierbei treten vor allem bei den kohlefaserverstärkten Kunststoffen mit Epoxidharzmatrizen erhebliche Probleme auf.

Der Erfindung liegt die Aufgabe zugrunde, ein Verfahren der eingangs genannten Gattung anzugeben, welches unter Vermeidung der genannten Nachteile Verfahrenschritte eine einfache und schnelle Reparatur ermöglicht, wobei die ursprünglichen Festigkeitseigenschaften des beschädigten Werkstücks im wesentlichen wieder herstellbar sind.

Diese Aufgabe wird mit den Merkmalen des Anspruchs 1 gelöst.

Der Erfindung liegt die Erkenntnis zugrunde, daß mittels einer Strahlungsquelle der Matrixwerkstoff gezielt aus dem Schadensbereich herauslösbar ist, ohne die Fasern bzw. den Verstärkungsaufbau zu zerstören. Damit kann der derart freigelegte Faserwerkstoff erneut mit flüssigem Matrixwerkstoff versehen und entsprechend dem ursprünglichen Verbund ausgehärtet werden. Der neue Matrixwerkstoff wird dabei zugleich mit dem weiteren Matrixwerkstoff des Kunststoffwerkstücks verbunden, so daß auf diese Weise die mechanischen Eigenschaften des Kunststoffwerkstücks vollständig restaurierbar sind. Ebenso wird eine homogene Werkstoffstruktur im ganzen Kunststoffwerkstück wiederhergestellt. Dadurch wird vorteilhaft auch vermieden, daß sich der Querschnitt des Kunststoffwerkstücks mit dem Behandlungsvorgang verändert. Desweiteren ist es ohne größeren Aufwand möglich, den Schaden des Kunststoffwerkstücks schnell und einfach zu beheben.

Besonders vorteilhaft ist dabei, daß das Behandeln bzw. Reparieren des Kunststoffwerkstücks nacheinander in folgenden Schritten abläuft: Zunächst wird das Kunststoffwerkstück im Strahlungsbereich einer energiereiche Strahlung erzeugenden Strahlungsquelle angeordnet und dort in bezug auf die Strahlungsquelle fest fixiert. Der Behandlungsbereich zeigt dabei in Richtung auf die Strahlungsquelle. Dann wird der Behandlungsbereich mit energiereicher Strahlung derart bestrahlt, daß sich der dort befindliche Matrixwerkstoff zersetzt. Anschließend wird der zersetzte Matrixwerkstoff entfernt. Durch Einbringen von neuem, den entfernten Matrixwerkstoff ersetzenden Matrixwerkstoff in den Behandlungsbereich sowie durch Aushärten des eingebrachten neuen Matrixwerkstoffes wird das Reparaturverfahren abgeschlossen.

Mit dem erfindungsgemäßen Verfahren wird auf einfache Weise zum einen die Reparturqualität verbessert und zum anderen die Reparaturgeschwindigkeit erhöht. Dadurch verringern sich die Reparaturkosten als auch die Ausfallzeiten des Kunststoffwerkstücks. Weiterhin ist ein in bezug auf die herkömmlichen Verfahren geringerer Materialbedarf notwendig, da kein teures Fasermaterial, sondern nur Matrixwerkstoff verwendet wird und das alte Fasermaterial entsprechend im Bauteil verbleibt. Als von Vorteil für die das Verfahren durchführenden Personen erweist es sich, daß die Arbeitshygiene verbessert wird. Das bisherige Ausschleifen des Behandlungsbereichs entfällt und somit der gesundheitsschädliche Schleifstaub.

Insbesondere sind folgende vorteilhafte Weiterbildungen günstig:
Um ein einfaches Handling mit dem Kunststoffwerkstück zu ermöglichen, wird es für den Behandlungsvorgang auf einem Halter befestigt. Alternativ dazu kann aber auch eine abtrennbare Haltevorrichtung an das Kunststoffwerkstück angesetzt werden. Beide Male ist damit das Kunststoffwerkstück einfach sowie behandlungsgerecht zur Strahlungsquelle anord- und fixierbar, insbesondere mittels am Halter bzw. an der Haltevorrichtung angeordneter Schnellverschlüsse. Nach dem Aushärten des neuen Matrixwerkstoffs wird der Halter bzw. die abtrennbare Haltevorrichtung dann vom Kunststoffwerkstück wieder entfernt.

Vorzugsweise für den Aushärtevorgang des in den Behandlungsbereich eingebrachten, neuen Matrixwerkstoffes wird das Kunststoffwerkstück in eine Preßform gelegt und anschließend, insbesondere im Behandlungsbereich, erwärmt und mit Anpreßdruck beaufschlagt. Somit sind auch hochfeste Kunststoffwerkstücke mit dem erfindungsgemäßen Verfahren ausbesserbar, ohne daß die Festigkeitseigenschaften des Kunststoffwerkstücks dadurch beeinträchtigt werden.

Entsprechend einer bevorzugten Weiterbildung des erfindungsgemäßen Verfahrens wird die Strahlungsquelle über eine Steuereinheit eingeschaltet sowie ausgelenkt. Dabei werden zunächst die Koordinaten oder eine sonstige geometrische Beschreibung des Behandlungsbereichs über eine Eingabeeinheit der Steuereinheit übermittelt. Im Anschluß daran scannt die Strahlungsquelle gemäß den eingegeben Koordinaten nacheinander den gesamten Behandlungsbereich des Kunststoffwerkstücks und löst somit den Matrixwerkstoff aus dem Faserverbund.

Vorzugsweise werden die Koordinaten des Behandlungsbereichs des Kunststoffwerkstücks entweder durch einen Computertomografen oder ein Ultraschallgerät mit jeweils einer Auswerteeinheit ermittelt sowie der Steuereinheit der Strahlungsquelle übermittelt. Selbst komplizierte Behandlungsbereiche der zu reparierenden Werkstücke sind somit einfach erfaßbar.

Zweckmäßig ist weiterhin, daß die Eingabe der Koordinaten in folgenden Schritten verläuft: Zunächst wird der von der Strahlungsquelle ausgesendete Strahl in bezug auf die Betriebsleistung mit verminderter Lichtwellenleistung jeweils punktweise über die Eingabeeinheit an den Randbereich des Behandlungsbereichs geführt. Bei jedem derart angesteuerten Punkt werden die jeweiligen Koordinaten des Punktes als Grenzwerte in einen an die Steuerungseinheit angeschlossenen Speicher übertragen und somit der Umfang und/oder die Fläche des Behandlungsbereichs nacheinander in den Speicher eingelesen. Dabei werden die jeweiligen Koordinaten des Punktes über die Auslenkung der Strahlungsquelle bestimmt und festgelegt. Weiterhin werden die die Schichtdicke betreffenden Daten, die Tiefenkoordinaten, über weitere Betätigungsmittel direkt in den Speicher eingegeben.

Einer möglichen unterschiedlichen Oberflächenausbildung wird dadurch entsprochen, indem die Strahlung während des Scannens in Abhängigkeit von den eingegebenen Tiefenkoordinaten des Behandlungsbereichs von der Steuereinheit moduliert wird. Insbesondere werden deshalb die einzelnen Behandlunsgbereiche zum Eingeben der Koordinaten zusätzlich mit der Strahlungsquelle in der genannten Weise abgetastet und die unterschiedlichen Tiefenkoordinaten in den Speicher eingegeben. Während des Scannens des Behandlungsbereichs kann zur Erfüllung desselben Zecks wahlweise auch die - Auslenkgeschwindigkeit der Strahlungsquelle in Abhängigkeit von den eingegebenen Tiefenkoordinaten des Behandlungsbereichs derart gesteuert werden, daß mit zunehmender Oberflächentiefe des Behandlungsbereichs die Auslenkgeschwindigkeit vermindert wird.

Mit dem Scannen in Abhängigkeit von der Oberflächentiefe und von dem gescannten Behandlungsbereich werden nacheinander die Daten im Speicher auf Null gesetzt und damit die den bereits gescanntenBehandlungsbereich betreffenden Daten im Speicher gelöscht.

In einer Verfahrensvariante wird der Behandlungsbereich wiederholt gescannt, wobei mit jedem Überstreichen eines Punktes des Behandlungsbereichs ein die Modulation und/oder die Auslenkgeschwindigkeit betreffender Wert von dem eingegebenen Tiefenwert subtrahiert wird, so daß mit Ende des Scannvorgangs die entsprechenden Werte auf Null gesetzt sind.

Vorzugsweise zum Erfassens aller Koordinaten der Behandlungsoberfläche im Speicher werden Zwischenwerte durch Interpolation mit benachbarten Koordninaten von der Steuereeinheit errechnet und im Speicher abgelegt.

Als vorteilhaft erweist es sich auch, wenn die Strahlungsquelle unterhalb des Kunststoffwerkstücks angeordnet ist, da mit dem Bestrahlen der zersetzte Matrixwerkstoff herausfällt. Eine Beeinträchtigung der Strahlungsquelle durch herabfallende zersetzte Matrixwerkstoffteilchen wird vorteilhaft dadurch vermieden, daß eine für energiereiche Strahlung transparente Wandung zwischen der Strahlungsquelle und dem Kunststoffwerkstück angeordnet ist. Vorzugsweise wird die Wandung während des Scannvorgangs seitlich verfahren, so daß die aus dem Behandlungsbereich heraus gelösten Teilchen auf die Wandung fallen und aus dem Strahlungsbereich heraustransportiert werden.

Das Herauslösen des Matrixwerkstoffes geht um so besser und um so schneller, wenn als Strahlungsquelle ein Laser verwendet wird. Insbesondere ein solcher, der eine Lichtwellenlänge erzeugt, die im Ultraviolettbereich liegt, so daß der den Faserwerkstoff verbindende Matrixwerkstoff durch Bestrahlung im wesentlichen zersetzt wird.

Gemäß einer anderen vorteilhaften Weiterbildung des erfindungsgemäßen Verfahrens, wird der zersetzte Matrixwerkstoff mittels einer Saugvorrichtung einfach abgesaugt.

Günstig ist es auch, wenn Fasermaterial nach dem Entfernen des zersetzten Matrixwerkstoffes zusätzlich eingebracht wird. Dadurch wird einer Tragquerschnittsverringerung infolge von Faserbrüchen entgegenwirkt, wobei die Kraftübertragung nicht durch Adhäsion, sondern durch eine formschlüssige Verbindung mit hoher Festigkeit erfolgt.

Der Faserwerkstoff wird durch die Bestrahlung am wenigsten angegriffen, wenn ein Laser verwendet wird, der durch erwärmungsfreie Zersetzung den Matrixwerkstoff aus dem Behandlungsbereich herauslöst. Deshalb ist ein EXIMER-Laser besonders als Strahlungsquelle geeignet.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 in einer schematischen Darstellung einen Verfahrenschritt eines Ausführungsbeispiels der Erfindung,
Figur 2 in einer schematischen Darstellung einen weiteren Verfahrensschritt des Ausführungsbeispiels der Erfindung,
Figur 3 in einer schematischen Darstellung einen weiteren Verfahrenschritt des Ausführungsbeipiels der Erfindung,
Figur 4 in einer schematischen Darstellung einen weiteren Verfahrensschritt des Ausführungsbeispiel der Erfindung sowie
Figur 5 in einer schematischen Darstellung einen letzten Verfahrensschritt des Ausführungsbeispiels der Erfindung.

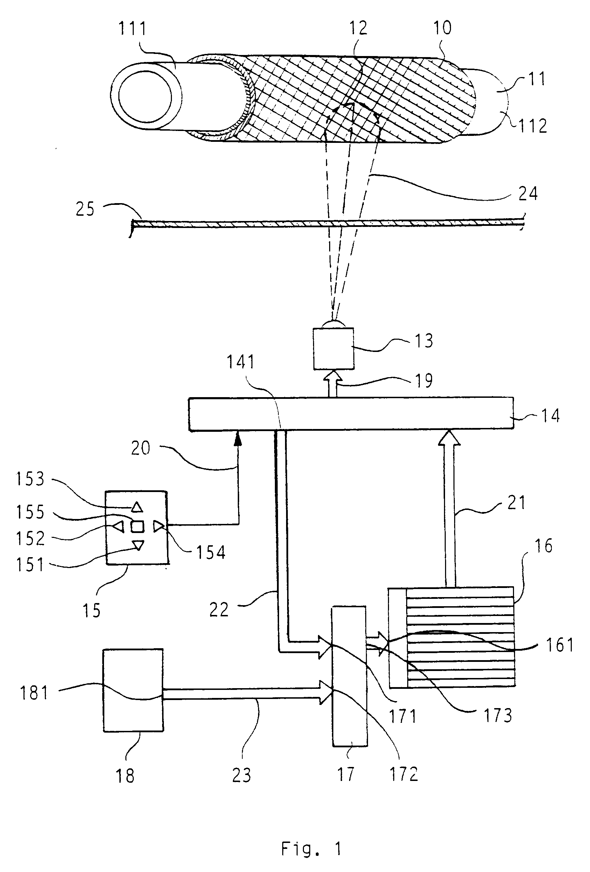

In den Figuren 1 bis 5 sind in unterschiedlichen schematischen Darstellungen die einzelnen Verfahrensschritte eines Ausführungsbeispiels der Erfindung dargestellt.

Dabei steckt ein hohlzylindrisches, aus Faserverbundwerkstoff bestehendes Kunststoffbauteil 10 auf einem dem Kunststoffbauteil 10 angepaßten Halter 11 und ist mit diesem reibschlüssig verbunden. Zum Fixieren an einer - aus Gründen der Übersichtlichkeit hier nicht dargestellten - weiteren Haltevorrichtung, weist der Halter 11 eine größere Längenerstreckung als das Kunststoffbauteil 10 auf. Der Halter 11 ragt daher beidseitig aus dem Kunststoffbauteil 10 heraus und ist somit ohne weiteres in entsprechend ausgebildeten Befestigungsmitteln der weiteren Haltevorrichtung fixierbar. Durch Ergreifen des Halters 11 an seinen seitlichen Enden 111 und 112 ist darüberhinaus das auf dem Halter 11 angeordnete Kunststoffbauteil 10 für die einzelen Verfahrensschritte einfach handhabbar, ohne daß dieses jedoch selbst berührt werden muß. Weiterhin kann dadurch in vorteilhafter Weise der Halter 11, insbesondere über Schnellverschlüsse, mit der weiteren Haltevorrichtung verbunden und somit räumlich fixiert werden.

Ein kreisförmiger, strichliert umrandetet dargestellter Bereich 12 des Kunststoffbauteils 10, siehe Figur 1, ist durch Delamination beschädigt und wird entsprechend den im Folgenden beschriebenen Verfahrensschritten repariert.

Gemäß der Darstellung in Figur 1 wird zunächst das auf dem Halter 11 angeordnete Kunstoffbauteil 10 in eine vorbestimmte Position zu einem Laser 13 auf der weiteren Haltevorrichtung fixiert, wobei sich der Behandlungsbereich 12 im Strahlungsbereich des Lasers 13 befindet und dieser somit in Richtung auf den Laser 13 zeigt.

Zur Steuerung des Lasers 13 ist eine Steuereinheit 14, eine erste Eingabeeinheit 15, ein Speicher 16 ein Adressierer 17 sowie eine weitere Eingabeeinheit 18 vorgesehen.

Der Laser 13 ist hierbei mit der Steuereinheit 14 und diese wiederum mit der ersten Eingabeeinheit 15 und dem Speicher 16 über Datenleitungen 19 bis 21 verbunden. Die erste Eingabeeinheit 15 weist dabei fünf Tasten 151 bis 155 auf. Mit dem Drücken jeweils einer der Tasten 151 bis 154 wird über die Steuereinheit 14 ein Auslenken des Laserstrahls 24 in die entsprechend auf der Taste 151 bis 154 angezeigte Richtung ermöglicht. In Abhängigkeit von der Betätigungsdauer der Tasten 151 bis 155 wird der Laserstrahl 24 ausgelenkt. Weiterhin werden mit Drücken der Taste 155 die die Auslenkung betreffenden Daten und somit indirekt die Koordinaten des angestrahlten Punkts des Behandlungsbereichs 12 im Speicher 16 eingelesen. Wahlweise sind Zwischenwerte aber auch durch Interpolation zweier benachbarter Werte durch die Steuereinheit ermittelbar.

Eine Datenleitung 22 verbindet einen Ausgang 141 der Steuereinheit 14 mit einem Eingang 171 des Adressieres 17. Ein Ausgang 181 der weiteren Eingabeeinheit 18 ist über eine Datenleitung 23 an einen weiteren Eingang 172 des Adressierers 17 angeschlossen. Ein Ausgang 173 des Adressierers 17 ist mit dem Eingang 161 des Speichers 16 verbunden. Durch diese Verknüpfungen wird ein Signal- und Datenaustausch zwischen den genannten Bausteinen 14 bis 18 zur Unterstützung der Steuereinheit 14 ermöglicht.

Nach dem Anordnen des Kunststoffbauteils 10 in der genannten Art und Weise zum Laser 13, werden die Koordinaten des Behandlungsbereichs 12 ermittelt und dem Speicher 16 zugeführt. Dafür wird zunächst die Leistung des Lasers 13 in bezug auf den sich anschließenden Scannvorgang durch einen am Laser 13 angeordneten Regler derart vermindert, daß der Werkstoff des Kunststoffbauteils 10 durch die Strahlung 24 nicht beeinträchtigt wird. Der Laserstrahl 24 wird dann über die Tasten 151 bis 154 an den Rand des Behandlungsbereichs und dann über die Fläche des Behandlungsbereichs Punkt für Punkt geführt, wobei bei jedem einzelnen Punkt des Behandlungsbereichs 12 die Taste 155 gedrückt wird. Mit dem Betätigen der Taste 155 werden die die Auslenkung des Lasers 13 betreffenden Daten, und somit indirekt auch die Koordinaten des jeweils angestrahlten Punktes, dem Speicher 16 über den Adressierer 17 zugeführt. Jeweils im Anschluß daran wird über eine Tastatur der weiteren Ausgabeeinheit 18 die Tiefenkoordinate des jeweiligen Punktes per Hand eingegben und durch den Adressierer 17 den abgespeicherten Daten im Speicher zugeordnet. Somit werden für jeden Punkt des Behandlungsbereichs 12 Daten für die Ansteuerung und die Leistung des Lasers 13 im Speicher 16 eingeschrieben. Alternativ dazu kann statt der Modulation der Laserleistung auch die Geschwindigkeit der Auslenkung des Lasers 13 gesteuert und dafür entsprechende Daten im Speicher 16 abgelegt werden.

Zwischen dem Laser 13 ist übrigens eine für energiereiche Strahlung transparente Wandung 25 angeordnet, auf die jedoch später noch eingegangen wird.

Bei dem verwendeten Laser 13 handelt es sich um einen EXCIMER-Laser, Excited Dimer Laser, der einen Laserstrahl 24 mit einer Lichtwellenlänge im Ultraviolettbereich, also ca. 250 bis 350 nm, erzeugt. Dadurch wird der polymere Matrixwerkststoff, Kunstharz 26, nahezu erwärmungsfrei zersetzt, zugleich aber der Faserwerkstoff 27 nicht durch die Laserbestrahlung angegriffen. Der benötigte Energiebereich liegt dabei zwischen 50 und 150 Watt.

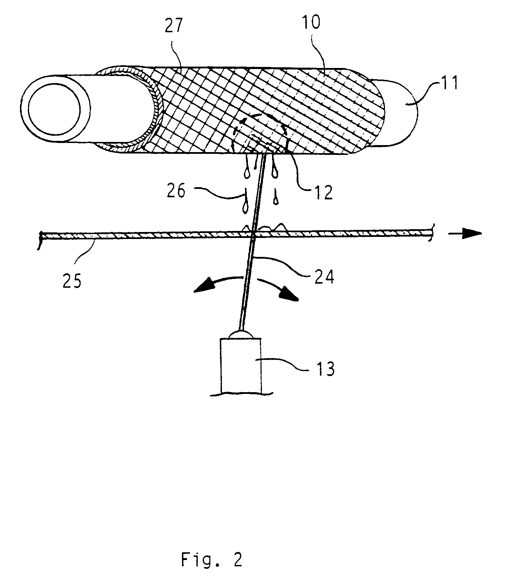

Wie in Figur 2 dargestellt, wird entsprechend den in den Speicher 16 eingegebenen Daten der Laser 13 durch die Steuereinheit 14 angeschaltet und über den Behandlungsbereich 12 mit einer das Kunstharz 26 zersetzenden Lichtwellenleistung geführt. Nacheinander wird somit der Behandlungsbereich 12 gescannt, so daß sich das Kunstharz 26 von dem Kunststoffbauteil 12 bzw. dem Faserwerkstoff 27 löst und auf die Wandung 25 herunter fällt. Dabei wird die Lichtwellenleistung des Lasers 13 in Abhängigkeit von den eingegebenen Tiefenkoordinaten moduliert, so daß das Kunstharz, unabhängig von seiner Oberflächenanordnung, mit einer konstanten Lichtwellenleistung des Lasers 13 angestrahlt wird. Die Bewegungspfeile stellen hierbei die Auslenkbewegungen des Lasers 13 während des Scannens dar. Mit dem Bestrahlen des Behandlungsbereichs 12 wird das Kunstharz 26 zersetzt bzw. von dem Faserwerkstoff 27 gelöst und fällt auf die Wandung 25 herunter. Der Faserwerkstoff 27 wird hierbei nicht beschädigt.

Mit dem Scannen wird der Speicher entspreched dem Scannvorgang nacheinander punktweise gelöscht.

Um die Laserstrahlung durch das auf die Wandung 25 herabfallende, sich zunehmend ansammelnde Kunstharz 26 nicht zu beeinträchtigen, bewegt sich die Wandung 25 kontinuierlich zur Seite, so daß der Laserstrahl 24 während des Scannvorgangs ungehindert durch die Wandung 25 treten kann. Alternativ dazu kann aber auch das zersetzte Kunstharz 26 durch eine entsprechende Vorrichtung abgesaugt werden.

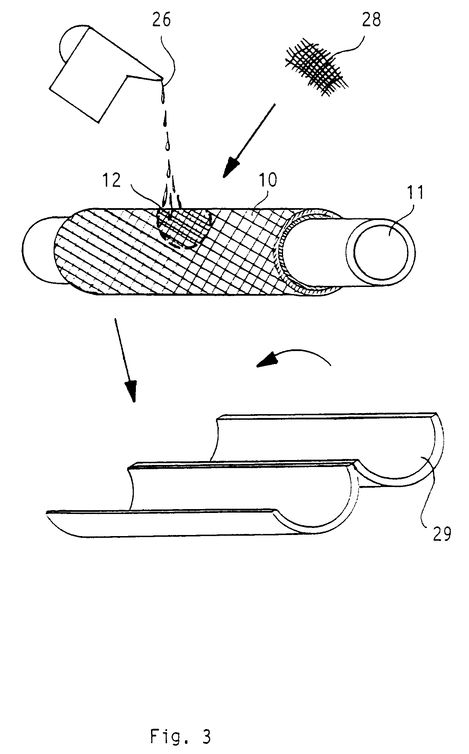

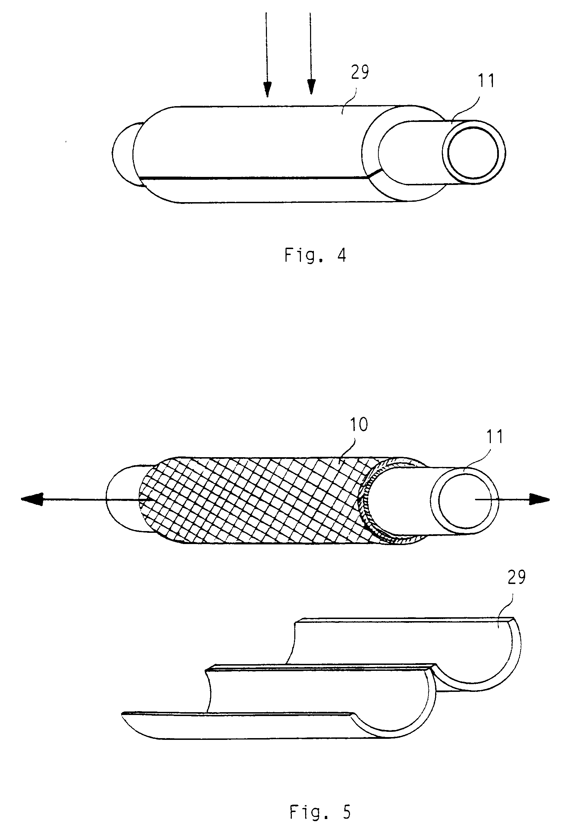

Entsprechend der Darstellung der Figur 3, wird der Halter 11 mit dem Kunststoffbauteil 10 nach dem Scannen gedreht, und zwar bis der Behandlungsbereich 12 nach oben zeigt. Durch Einlegen von zusätzlichem Fasergewebe 28 wird nach dem Scannen der freiliegende Faserwerkstoff 27 verstärkt, vor allem um den durch gebrochene Fasern des Faserwerkstoffs 27 möglicherweise verursachten Beeinträchtigungen der Festigkeitseigenschaften des Kunststoffbauteils 10 von vornherein entgegenzuwirken. Anschließend wird flüssiger neuer Kunstharz 26 in den Behandlungsbereich 12 gegossen, das Kunststoffbauteil 10 mit einer Preßform 29 umgeben und anschließend in einem Ofen unter Wärmeeinwirkung ausgehärtet, siehe Figur 4. Nach Entfernen des Kunststoffbauteils 10 aus der Preßform 29 und nach Abziehen des Kunststoffbauteils 10 von dem Halter 11, siehe Figur 5, ist das Kunststoffbauteil 10 wieder voll verwendbar. Mit dem Verfahren ist somit das Kunststoffbautteil 10 vollständig restaurierbar.

Gemäß einem anderen Verfahren werden die den Behandlungsbereich 12 betreffenden Daten durch einen Computertomografen oder durch ein Ultraschallgerät mit jeweils einer Auswerteeinheit ermittelt und über den Adressierer 17 in dem Speicher 16 eingegeben und dort enstprechenden, den Scannvorgang betreffenden Daten zugeordnet.

## Patentansprüche

1. Verfahren zum Reparieren von teilweise beschädigten Werkstücken aus Verbundwerkstoff,
**gekennzeichnet durch**
folgende Maßnahmen:
Bestrahlen des Behandlungsbereichs (12) mit energiereicher Strahlung, so daß sich der dort befindliche Matrixwerkstoff (26) zersetzt;
Entfernen des zersetzten Matrixwerkstoffs (26);
Einbringen von neuem, den entfernten Matrixwerkstoff (26) ersetzenden Matrixwerkstoff (26) in den Behandlungsbereich (12) sowie
Aushärten des eingebrachten neuen Matrixwerkstoffs (26).

2. Verfahren nach Anspruch 1, **dadurch gekennzeichnet,** daß das Kunststoffwerkstück (10) für den Behandlungsvorgang auf einem Halter (11) befestigt oder eine abtrennbare Haltevorrichtung an das Kunststoffwerkstück (10) angesetzt wird, wobei nach dem Aushärten des neuen Matrixwerkstoffs (26) der Halter (11) bzw. die abtrennbare Haltevorrichtung von dem Kunststoffwerkstück (10) wieder entfernt wird.

3. Verfahren nach einem der Ansprüche 1 oder 2, **dadurch gekennzeichnet,** daß für den Aushärtevorgang des in den Behandlungsbereich (12) eingebrachten neuen Matrixwerkstoffs (26) das Kunststoffwerkstück (10) in eine Preßform (29) gelegt sowie anschließend insbesondere im Behandlungsbereich (12) erwärmt und mit Anpreßdruck beaufschlagt wird.

4. Verfahren nach einem der vorangehenden Ansprüche, **dadurch gekennzeichnet,** daß die Strahlungsquelle (13) mittels einer Steuereinheit (14) in ihrer Intensität beeinflußt und/oder in zwei Koordinatenrichtungen ausgelenkt wird, wobei zunächst die Koordinaten oder eine sonstige geometrische Beschreibung des Behandlungsbereichs (12) über eine Eingabeeinheit (15, 18) der Steuereinheit (14) übermittelt werden, anschließend die Strahlungsquelle (13), gemäß den eingegeben Koordinaten, nacheinander den gesamten Behandlungsbereich (12) scannend überstreicht.

5. Verfahren nach Anspruch 4, **dadurch gekennzeichnet,** daß die Eingabe der Koordinatenbereiche in folgenden Schritten verläuft:
der Strahl der Strahlungsquelle (13) wird jeweils mit in bezug auf die maximale Leistung verminderter Leistung punktweise an den Randbereich über die Eingabeeinheit (15) geführt;
über ein Betätigungsmittel (155) werden die jeweiligen Koordinaten in zwei Richtungen des somit angesteuerten Punktes als Grenzen des zu behandelnden Bereichs in einen an die Steuerungseinheit (14) angeschlossenen Speicher (16) übertragen,
die die Tiefe des Behandlungsbereichs (12) als dritte Koordinatenrichtung betreffenden Daten werden über weitere Betätigungsmittel direkt in den Speicher (16) übertragen.

6. Verfahren nach Anspruch 5, **dadurch gekennzeichnet,** daß in Speicherplätzen des Speichers jeweils zugeordnet zu den einzelnen Koordinatenwerten, bezogen auf zwei Koordinatenrichtungen, der Wert der dritten Koordinatenrichtung als Speicherinhalt festgehalten ist.

7. Verfahren nach Anspruch 4, **dadurch gekennzeichnet,** daß die Koordinatengrenzen oder eine geometrische Beschreibung des Behandlungsbereichs (12) durch einen Computertomografen, ein Ultaschallgerät oder ein anderes bildgebendes Verfahren und eine nachgeschaltete Auswerteeinheit ermittelt und in die Steuereinheit (14) übertragen werden.

8. Verfahren nach einem der Ansprüche 4 bis 7, **dadurch gekennzeichnet,** daß die Strahlung in Abhängigkeit der eingegebenen jeweiligen Tiefenkoordinaten des Behandlungsbereichs (12) beim Scannen von der Steuereinheit (14) moduliert wird.

9. Verfahren nach einem der Ansprüche 4 bis 8, **dadurch gekennzeichnet,** daß während des Scannens des Behandlungsbereichs (12) die Auslenkgeschwindigkeit der Strahlungsquelle (13) in Abhängigkeit der eingegebenen Tiefenkoordinaten des Behandlungsbereichs (12) derart gesteuert wird, daß sich mit zunehmender Tiefe des Behandlungsbereichs (12) die Auslenkgeschwindigkeit vermindert.

10. Verfahren nach einem der Ansprüche 4 bis 9, **dadurch gekennzeichnet,** daß der Behandlungsbereich (12) wiederholt gescannt wird, wobei mit jedem Überstreichen eines Punktes des Behandlungsbereichs (12) ein die Modulation und/oder die Auslenkgeschwindigkeit betreffender Wert von dem eingegebenen Wert subtrahiert wird, so daß bei Erreichen eines Nullwertes die Bestrahlung des betreffenden Bereichs unterbrochen wird.

11. Verfahren nach einem der vorangehenden Ansprüche, **dadurch gekennzeichnet,** daß als Strahlungsquelle ein Laser (13) verwendet wird, der insbesondere eine Lichtwellenlänge erzeugt, die im Ultraviolettbereich liegt, so daß der den Faserwerkstoff (27) verbindende Matrixwerkstoff (26) durch Bestrahlung im wesentlichen zersetzt wird.

12. Verfahren nach Anspruch 11, **dadurch gekennzeichnet,** daß der zersetzte Matrixwerkstoff (26) mittels einer Saugvorrichtung abgesaugt wird.

13. Verfahren nach einem der vorangehenden Ansprüche, **dadurch gekennzeichnet,** daß zusätzlich Faserwerkstoff (28) in den von zersetzten Matrixwerkstoff (26) gereinigten Behandlungsbereich (12) eingebracht wird.

14. Verfahren nach einem der vorangehenden Ansprüche, **dadurch gekennzeichnet,** daß der Matrixwerkstoff (26) durch erwärmungsfreie Zersetzung aus dem Behandlungsbereich (12) herausgelöst wird.

15. Verfahren nach einem der Ansprüche 12 bis 14, **dadurch gekennzeichnet,** daß als Strahlungsquelle ein EXIMER-Laser (13) verwendet wird.

## Claims

1. Process for repairing partly damaged workpieces of composite material, characterized by the following steps:
- Irradiating the treatment area (12) with high-energy radiation so that the matrix material (26) located there breaks down;
- removing the broken down matrix material (26);
- introducing new matrix material (26) into the treatment area (12) to replace the matrix material (26) which has been removed, and
- hardening the new matrix material (26) introduced.

2. Process according to claim 1, characterized in that the plastics workpiece (10) is fixed on a holder (11) for the treatment process or a detachable holding device is placed on the plastics workpiece (10), the holder (11) or the removable holding device being removed from the plastics workpiece (10) after the new matrix material (26) has hardened.

3. Process according to one of claims 1 and 2, characterized in that, for the process of hardening the new matrix material (26) introduced into the treatment area (12), the plastics workpiece (10) is placed in a pressing mould (29) and is then heated and subject to contact pressure, particularly in the treatment area 12.

4. Process according to one of the preceding claims, characterized in that the radiation source (13) is controlled in its intensity and/or is deflected into directions of co-ordinates by means of a control unit (14), the coordinates or some other geometric description of treatment area (12) first being transmitted to the control unit (14) by means of an input unit (15, 18), and then the radiation source (13) making a scanning sweep over the entire treatment area (12) in accordance with the co-ordinates fed in.

5. process according to claim 4, characterized in that the areas of coordinates are fed in in the following steps:
- the beam of the radiation source (13) is guided point by point to the edge area by means of the input unit (15), at reduced power relative to maximum power;
- using actuating means (155) the coordinates in two directions of the point thus controlled are transmitted, as the boundaries of the area to be treated, to a memory (16) attached to the control unit (14),
- the data relating to the depth of the treatment area (12), as the third direction of co-ordinates, are fed directly into the memory (16) via further actuating means.

6. Process according to claim 5, characterized in that the value of the third direction of co-ordinates is retained as the memory contents in storage locations of the memory associated with the individual co-ordinate values, based on two directions of co-ordinates.

7. Process according to claim 4, characterized in that the coordinate limits or a geometric description of the treatment area (12) is or are established by a computer tomograph, an ultrasound apparatus or some other imaging process and thereafter an evaluator unit and transmitted to the control unit (14).

8. Process according to one of claims 4 to 7, characterized in that the radiation is modulated by the control unit (14) as a function of the particular depth co-ordinates fed in for the treatment area (12) during scanning.

9. Process according to one of claims 4 to 8, characterized in that, during the scanning of the treatment area (12), the speed of deflection of the radiation source (13) is controlled, as a function of the depth co-ordinates fed in for the treatment area (12), in such a way that the speed of deflection decreases as the depth of the treatment area (12) increases.

10. Process according to one of claims 4 to 9, characterized in that the treatment area (12) is repeatedly scanned, whilst, each time a point in the treatment area (12) is swept, a value relating to the modulation and/or the speed of deflection is subtracted from the input value, so that when zero is reached the irradiation of the area in question is interrupted.

11. Process according to one of the preceding claims, characterized in that the radiation source used is a laser (13) which generates, in particular, a light wave length within the ultraviolet range, so that the matrix material (26) which connects the fibrous material (27) is substantially destroyed by irradiation.

12. Process according to claim 11, characterized in that the matrix material (26) destroyed is removed by means of a suction device.

13. Process according to one of the preceding claims, characterized in that, additionally, fibrous material (28) is introduced into the treatment area (12) cleansed of destroyed matrix material (26).

14. Process according to one of the preceding claims, characterized in that the matrix material (26) is removed from the treatment area (12) by heat-free decomposition.

15. Process according to one of claims 12 to 14, characterized in that an Eximer laser (13) is used as the radiation source.

## Revendications

1. Procédé de réparation de pièces en matière composite partiellement endommagées, caractérisé en ce qu'on procède aux opérations suivantes :
- on irradie la zone de traitement (12) par un rayonnement riche en énergie, de sorte que la matière de matrice (26) qui s'y trouve se désintègre ;
- on enlève la matière de matrice (26) désintégrée ;
- on applique dans la zone de traitement (12) une nouvelle matière de matrice (26) qui vient remplacer la matière de matrice (26) enlevée ; et
- on durcit la nouvelle matière de matrice (26) appliquée.

2. Procédé selon la revendication 1, caractérisé en ce que pour l'opération de traitement, la pièce en matière plastique (10) est fixée sur un support (11), ou un dispositif de support amovible est ajouté à la pièce en matière plastique (10), le support (11) ou le dispositif de support amovible étant à nouveau enlevé de la pièce en matière plastique (10) après le durcissement de la nouvelle matière de matrice (26).

3. Procédé selon l'une ou l'autre des revendications 1 et 2, caractérisé en ce que pour l'opération de durcissement de la nouvelle matière de matrice (26) appliquée dans la zone de traitement (12), la pièce en matière plastique (10) est placée dans un moule et ensuite chauffée en particulier dans la zone de traitement (12) et soumise à une pression de contact.

4. Procédé selon l'une quelconque des revendications précédentes, caractérisé en ce que l'intensité de la source (13) de rayonnement est influencée au moyen d'une unité de commande (14) et/ou déviée dans deux directions de coordonnées, les coordonnées ou une autre description géométrique de la zone de traitement (12) étant tout d'abord transmises à l'unité de commande (14) par l'intermédiaire d'une unité d'entrée (15, 18), ensuite la source (13) de rayonnement parcourt en la balayant progressivement la totalité de la zone de traitement (12) selon les coordonnées entrées.

5. Procédé selon la revendication 4, caractérisé en ce que l'entrée des plages de coordonnées se fait selon les étapes suivantes :
- le rayon de la source (13) de rayonnement est conduit ponctuellement sur la zone de bordure avec une puissance réduite par rapport à la puissance maximale, par l'intermédiaire de l'unité d'entrée (15) ;
- par l'intermédiaire d'un moyen d'actionnement (155), les coordonnées respectives sont transmises en tant que limites de la zone de traitement, dans une mémoire (16) raccordée à l'unité de commande (14), dans deux directions du point ainsi visé ;
- les données concernant la profondeur de la zone de traitement (12), en tant que troisième direction de coordonnées, sont transmises directement dans la mémoire (16) par l'intermédiaire d'autres moyens d'actionnement.

6. Procédé selon la revendication 5, caractérisé en ce que la valeur de la troisième direction de coordonnées, associée respectivement aux diiférentes valeurs de coordonnées, par rapport aux deux directions de coordonnées, est maintenue comme contenu de mémoire dans des emplacements de la mémoire.

7. Procédé selon la revendication 4, caractérisé en ce que les limites de coordonnées ou une description géométrique de la zone de traitement (12) sont déterminées par un tomographe à ordinateur, un appareil à ultrasons ou un autre procédé d'imagerie, et par une unité d'analyse qui y est raccordée, et transmises à l'unité de commande (14).

8. Procédé selon l'une quelconque des revendications 4 à 7, caractérisé en ce que le rayonnement est modulé lors du balayage par l'unité de commande (14) en fonction des coordonnées de profondeur de la zone de traitement (12) respectivement entrées.

9. Procédé selon l'une quelconque des revendications 4 à 8, caractérisé en ce que pendant le balayage de la zone de traitement (12), la vitesse de déviation de la source (13) de rayonnement est commandée en fonction des coordonnées de profondeur entrées de la zone de traitement (12), de telle sorte que la vitesse de déviation diminue avec l'accroissement de la profondeur de la zone de traitement (12).

10. Procédé selon l'une quelconque des revendications 4 à 9, caractérisé en ce que la zone de traitement (12) est balayée de façon répétée, une valeur concernant la modulation et/ou la vitesse de déviation étant soustraite de la valeur entrée à chaque balayage d'un point de la zone de traitement (12), de sorte que l'irradiation de la zone concernée est interrompue lorsqu'une valeur zéro est atteinte.

11. Procédé selon l'une quelconque des revendications précédentes, caractérisé en ce que la source de rayonnement utilisée est un laser (13) qui engendre en particulier une longueur d'onde lumineuse qui est située dans la gamme de l'ultraviolet, de sorte que la matière de matrice (26) qui relie la matière renforcée par des libres (27) est essentiellement désintégrée par l'irradiation.

12. Procédé selon la revendication 11, caractérisé en ce que la matière de matrice (26) désintégrée est aspirée au moyen d'un dispositif d'aspiration.

13. Procédé selon l'une quelconque des revendications précédentes, caractérisé en ce qu'on applique en supplément de la matière renforcée par des fibres (28) dans la zone de traitement (12) nettoyée de la matière de matrice (26) désintégrée.

14. Procédé selon l'une quelconque des revendications précédentes, caractérisé en ce que la matière renforcée par des fibres (28) est extraite de la zone de traitement (12) par désintégration sans échauffement.

15. Procédé selon l'une quelconque des revendications 12 à 14, caractérisé en ce que la source de rayonnement utilisée est un laser EXIMER(13).
